# EUROPÄISCHE PATENTSCHRIFT

(11) **EP 0 685 528 B1**
(45) Veröffentlichungstag und Bekanntmachung des Hinweises auf die Patenterteilung: **27.10.1999**
(21) Anmeldenummer: 95107793.2
(22) Anmeldetag: 22.05.1995
(51) Int. Cl.: C08L 77/00, C08J 5/00

(54) **Polyamidcompounds mit erhöhter Schmelzeviskosität, Verfahren zur Herstellung und ihre Verwendung**
Polyamide compounds with raised melt viscosity, process for making them and their utilisation
Composées de polyamides avec viscosité à fusion exhaussé, procédé pour leur production et leur utilisation

(30) Priorität: 03.06.1994 DE 4419592
(43) Veröffentlichungstag der Anmeldung: 06.12.1995
(73) Patentinhaber: BAYER AG, 51368 Leverkusen (DE)
(72) Erfinder: El Sayed, Aziz, Dr., D-51375 Leverkusen (DE); Ostlinning, Edgar, Dr., D-40237 Düsseldorf (DE); Idel, Karsten-Josef, D-47802 Krefeld (DE); Goldbach, Hubert, Dipl.-Ing., D-40882 Ratingen (DE); Löhr, Dieter, Dr., D-47589 Uedem (DE); Lange, Ralf, Dr., D-47800 Krefeld (DE)

(56) Entgegenhaltungen:
- EP-A- 0 482 483
- US-A- 4 673 723
- US-A- 5 177 144

## Beschreibung

Die Erfindung betrifft Polyamidformmassen mit erhöhter Viskosität, guter Thermostabilität sowie guten mechanischen Eigenschaften, Verfahren zur Herstellung und ihre Verwendung.

Polyamid-Formmassen sind hochwertige Thermoplaste, die sich durch hohe Wärmeformbeständigkeit, sehr guten mechanischen Eigenschaften, hohe Zähigkeiten, gute Resistenz gegenüber Chemikalien und leichte Verarbeitbarkeit auszeichnen. Die Eigenschaften der Polyamide lassen sich durch Verstärkung mit Glasfasern, Glaskugeln, mineralischen Füllstoffen und Mischungen aus diesen merklich erweitern. Eine Elastomermodifizierung verbessert die Schlagzähigkeit von Polyamiden. Durch die Vielzahl der Kombinationsmöglichkeiten werden immer neue maßgeschneiderte Produkte für spezielle Einsatzgebiete entwickelt.

Die Anwendungspalette der Polyamide umfaßt Fasern, Folien, Schmelzkleber und Formteile für die Elektro-, Bau-, Möbel- und Automobilindustrie. Verstärkte Polyamide zählen zu den hochwertigen Engineering-Produkten, die in verschiedenen Bereichen Metallanwendungen ersetzt haben.

Als teilkristalline Polymere mit sehr hohem Anteil an Wasserstoffbrücken haben die Polyamide sehr niedrige Schmelzviskositäten. Polyamide mit einer rel. Viskositäten von 3 (gemessen in 1%iger Metakresollösung bei 25°C) haben sich für die Herstellung von Formteilen in Spritzgießverfahren sehr bewährt. Für die Herstellung von Folien, Profilen oder Rohren im Extrusionsverfahren werden Polyamide mit erhöhten Viskositäten verwendet. Je nach Einsatzgebiet reichen relative Viskositäten von 4 bis 6 aus (gemessen in 1%iger Metakresollösung bei 25°C), um Extrudaten mit ausreichender Schmelzestandfestigkeiten zu erhalten.

Die Erhöhung der Viskosität von Polyamiden erfolgt in der Regel durch:

### 1. Festphasen-Nachkondensation (z.B. DD 248 130)

Hierbei werden die Polyamidgranulate mit niedrigeren Viskositäten in kontinuierliche oder diskontinuierliche Inert-Gastrockner bei erhöhten Temperaturen (unter dem Schmelzpunkt) solange erwärmt, bis die gewünschten Viskositäten erreicht sind (20 bis 60 Stunden). Hierbei muß jedoch eine ausreichende Konzentration an aktiven COOH- und -NH₂-Gruppen vorhanden sein, um die Festphasen-Nachkondensation zu starten.

### 2. Verzweigte Polyamide (z.B. JP 52 032 944)

Durch die Zugabe von kleinen Mengen an Tricarbonsäuren oder Triaminen können bei der Herstellung der Polyamide verzweigte Polyamide mit höheren Viskositäten erhalten werden.

### 3. Katalytische Additive (z.B. EP 315 408)

Durch die Zugabe von katalytischen Mengen an Orthophosphorsäure oder phosphorige Säuren kann die Nachkondensationszeit bei trockenen Polyamiden merklich reduziert werden. In Gegenwart geringer Mengen an Feuchte baut das Molekulargewicht deutlich ab.

Beim Compoundieren (Abmischen) von Glasfasern mit Polyamiden mit höheren Viskositäten nehmen deren Viskositäten drastisch ab.

Folgende Verfahren werden zur Herstellung von glasfaserverstärkten Polyamidcompounds mit erhöhten Viskositäten verwendet:
1) zuerst wird der fertige Polyamidcompound (mit Glasfasern und Additiven) hergestellt, anschließend wird das fertige Granulat im Inertgastrockner in fester Phase nachkondensiert;
2) für die Herstellung des Compounds wird statt reinem Polyamid eine Mischung aus Polyamid (normaler Viskosität) und einem Polymeren mit reaktiven funktionellen Gruppen verwendet. Geeignete Polymere sind Homo- oder Copolymere des Ethylens, die als reaktive Gruppen Maleinsäureanhydrid, Carbonsäuren oder t-Butylacrylate enthalten. Während des Compoundierens reagieren die Amidgruppen mit dem Anhydrid- oder Acrylatgruppen und erhöhen damit das Molekulargewicht des Compounds.

Dadurch werden die Eigenschaften des reinen Polyamids durch die Eigenschaften der Polymermischung ersetzt.

Die US-A-5,177,144 offenbart eine steife Formmasse, bestehend im wesentlichen aus einem thermoplastisch verarbeitbarem Polyamid, einem als Schlagzähigkeitsverbesserer dienenden Elastomer und einem Polyepoxid.

Der Erfindung liegt die Aufgabe zugrunde, glasfaserverstärkte Polyamidcompounds mit erhöhten Viskositäten, guten thermischen und mechanischen Eigenschaften während des Compoundiervorgangs herzustellen.

Gegenstand der Erfindung ist eine Mischung aus
A) 79 bis 47 Gew.-% eines thermoplastischen teilkristallinen Polyamids,
B) 0 bis 50 Gew.-% Verstärkungsstoffen,
C) 0,1 bis 4 Gew.-% eines Diepoxids,
D) 0,1 bis 2 Gew.-% Verarbeitungsadditiven.

Diese Polyamidformmassen erreichen nicht nur die gewünschte Viskosität während der Compoundierung, sondern lassen sich durch ihr breites Verarbeitungsfenster und die Thermostabilität der Schmelze sowohl nach dem Spritzgieß-, dem Gasinjektions- als auch nach dem Extrusions- und Extrusionsblasverfahren sehr gut verarbeiten. Uberraschend ist die Standfestigkeit der Schmelze und die sehr gute Verschweißbarkeit von extrudierten oder gespritzten Teilen nach dem Heißelement-, Heißsiegel-, Vibrations- oder Hochfrequenzverfahren. Überraschend ist ebenfalls das breite Verschweißungsfenster der beanspruchten Produkte.

Die Herstellung der erfindungsgemäßen Massen erfolgt auf Einwellen- oder Zweiwellen-Extrudern bzw. -Knetern. Die Masse-Temperatur richtet sich nach den verwendeten Polyamiden und liegt zwischen 220°C und 300°C.

Als thermoplastisches Polyamid A) der erfindungsgemäßen Formmassen eignen sich teilkristalline Polyamide (PA), bevorzugte Polyamide sind PA 6, PA 66, PA 46, PA 610, PA 6/6T oder teilkristalline Copolyamide bzw. Mischungen auf Basis dieser Komponenten.

Als Verstärkungsstoffe B) für die erfindungsgemäßen Formmassen werden handelsübliche Glasfasern, Kohlefasern, Mineralfasern, Füllstoffe mit Oberflächenbehandlung usw. für Polyamide, einzeln oder in Mischungen verwendet.

Als Diepoxid C) für die erfindungsgemäßen Formmassen werden handelsübliche Diepoxide, auf Basis Diglycidylether, (Bisphenol A und Epichlorhydrin), auf Basis Aminepoxidharzen (Anilin und Epichlorhydrin), auf Basis Diglycidylester (cycloaliphatische Dicarbonsäuren und Epichlorhydrin) einzeln oder in Mischungen verwendet, sowie vorzugsweise Diepoxide auf Basis 2,2-Bis[p-hydroxy-phenyl]-propan-diglycidylether, Bis-[p-(N-methyl-N-2,3-epoxypropylamino)-phenyl]-methan.

Die Verarbeitungsadditive D) bestehen aus handelsüblichen Gleitmitteln, Thermostabilisatoren, Nukleierungsmitteln und Färbemitteln (Pigmente oder Farbstoffe).

### Beispiele

Folgende Produkte wurden in den Beispielen verwendet:
- PA 6 =: Durethan® B 31 F der Bayer AG (rel. Viskosität 3, gemessen in 1%iger Metakresollösung bei 25°C)
- PA 66 =: Durethan® A 30 der Bayer AG (rel. Viskosität 3, gemessen in 1%iger Metakresollösung bei 25°C)
Diepoxid = Lekutherm® X 18, X20 der Bayer AG,
Amidwachs der Fa. Abrilwax,
Bayer Glasfaser CS 7919,
Nucleierungsmittel = Mikrotalkum,
Hitzestabilisator CuJ/Alkalihalogenide,
Ruß.

### Beispiel 1 bis 3

Die Einsatzstoffe wurde gemischt und bei 260°C auf einem Zweiwellen-Kneter (ZSK) extrudiert. Das erhaltene Granulat wurde bei 70°C im Vakuumtrockenschrank 4 Stunden getrocknet. An dem Granulat wurde die rel. Viskosität und die Schmelzviskosität bei 290°C/5 kg bestimmt (Tabelle 1).

**Tabelle 1**

| Änderung der rel. Viskosität und Schmelzviskosität von PA 6 in Abhängigkeit vom Lekutherm X 18-Gehalt. | | | | | |
|---|---|---|---|---|---|
| Beispiel Nr. | | Vergl. 1 | Bsp. 1 | Bsp. 2 | Bsp. 3 |
| PA 6 | % | 100 | 99,8 | 99,7 | 99,6 |
| Lekutherm X 18 | % | keine | 0,2 | 0,3 | 0,4 |
| Drehzahl | Upm | 100 | 1200 | 100 | 100 |
| Einstelltemp. | °C | 260 | 260 | 260 | 260 |
| Massetemperatur | °C | 265 | 267 | 268 | 267 |
| Arbeitsaufnahme | Nm | 23 | 26 | 36 | 44 |
| rel. Viskosität | | 2,97 | 3,35 | 3,61 | 3,86 |
| Meltvolumenindex 290°C/5 kg | ccm/10min | 159 | 74 | 38 | 25 |
| Isotherm.Kristallistionszeit bei 200°C | min | 3,8 | 5,0 | 5,4 | 5,5 |

### Beispiele 4 bis 7

Die Einsatzfeststoffe wurden gemischt und bei 260°C bis 290°C auf einem Zweiwellen-Kneter (ZSK) extrudiert. Das Lekutherm X 18 wurde mit einer Flüssigdosierpumpe in die PA-Schmelze dosiert. Das erhaltene Granulat wurde bei 70°C im Vakuumtrockenschrank 4 Stunden getrocknet. An dem Granulat wurde der Aschegehalt, die rel. Viskosität und die Schmelzviskosität bei 270°C/5 kg bestimmt (Tabelle 2).

Ein linearer Zusammenhang zwischen Diepoxidgehalt und Schmelzviskosität konnte nachgewiesen werden.

**Tabelle 2**

| Änderung der rel. Viskosität von glasfasesrverstärktem PA 6 in Abhängigkeit vom Lekutherm X 18-Gehalt. | | | | | | |
|---|---|---|---|---|---|---|
| Beispiel Nr. | | Vergl. 2 | Bsp. 4 | Bsp. 5 | Bsp. 6 | Bsp. 7 |
| PA 6 | % | 69,6 | 69,4 | 69,3 | 69,2 | 69,1 |
| Glasfaser | % | 30,0 | 30,0 | 30,0 | 30,0 | 30,0 |
| Ruß | % | 0,2 | 0,2 | 0,2 | 0,2 | 0,2 |
| Hitzestabilisator | % | 0,2 | 0,2 | 0,2 | 0,2 | 0,2 |
| Lekutherm X 18 | % | keine | 0,2 | 0,3 | 0,4 | 0,5 |
| Aschegehalt | % | 29,9 | 30,0 | 29,6 | 29,3 | 30,2 |
| rel. Viskosität | | 2,85 | 3,32 | 3,50 | 3,72 | 3,93 |
| Meltvolumenindex 270°C/5 kg | cm³/10min | 14,4 | 12,0 | 8,80 | 6,52 | 3,52 |

### Beispiel 8 bis 9

Die Einsatzstoffe wurden gemischt und bei 290°C extrudiert. Das erhaltene Granulat wurde bei 70°C im Vakuumtrockenschrank 4 Stunden getrocknet und anschließend auf einer Arburg Spritzgießmaschine bei einer Massetemperatur von 290°C zu Prüfkörpern verarbeitet. Die mechanischen Eigenschaften und die Schweißnahtfestigkeit wurden bestimmt (Tabelle 2).

**Tabelle 3**

| Mechanische Eigenschaften von Compounds aus glasfaserverstärkten PA 6 mit Diepoxiden. | | | | | |
|---|---|---|---|---|---|
| Beispiel Nr. | | Vgl. 3 | Bsp. 8 | Vgl. 4 | Bsp. 9 |
| PA 6 | % | 69,4 | 69,0 | 59,4 | 59,0 |
| Glasfaser | % | 30,0 | 30,0 | 40,0 | 40,0 |
| Ruß | % | 0,2 | 0,2 | 0,2 | 0,2 |
| Hitzestabilisator | % | 0,2 | 0,2 | 0,2 | 0,2 |
| Gleitmittel | % | 0,2 | 0,2 | 0,2 | 0,2 |
| Lekutherm X 18 | % | keine | 0,4 | keine | 0,4 |
| rel. Viskosität | | 2,85 | 3,84 | 2,84 | 3,84 |
| Meltvolumenindex 270°C/5 kg | ccm/10min | 18,72 | 6,23 | 10,65 | 1,68 |
| Izod-Schlagzähigkeit | KJ/m² | 65 | 66 | 67 | 70 |
| Reißfestigkeit | N/mm² | 166 | 170 | 200 | 195 |
| Reißdehnung | % | 3,5 | 3,5 | 2,1 | 2,8 |
| Zug-E-Modul | N/mm² | 9800 | 10100 | 11800 | 13190 |
| Biegefestigkeit | N/mm² | 269 | 262 | 307 | 247 |
| Randfaserdehnung | % | 4,4 | 4,4 | 3,6 | 2,3 |
| Biege-E-Modul | N/mm² | 9050 | 8560 | 11000 | 11500 |
| | | | | | |
| Bindenahtfestigkeit | N/mm² | 88 | 92 | 86 | 88 |
| Schweißnahtfestigkeit | N/mm² | 90 | 95 | - | - |
| Meltvolumenindex 270°C/5 kg | | | | | |
| nach 5 min | cm³/10min | 18,72 | 6,23 | 10,65 | 1,68 |
| nach 10 min | cm³/10min | 18,90 | 7,18 | 11,08 | 1,75 |
| nach 15 min | cm³/10min | 20,80 | 8,38 | 10,33 | 1,82 |
| nach 20 min | cm³/10min | 18,40 | 8,70 | 9,65 | 1,95 |

### Beispiel 10

Die Einsatzstoffe wurden gemischt und bei 290°C extrudiert. Das erhaltene Granulat wurde bei 70°C im Vakuumtrockenschrank 4 Stunden getrocknet und anschließend auf einer Arburg Spritzgießmaschine bei einer Massetemperatur von 290°C zu Prüfkörpern verarbeitet. Die mechanischen Eigenschaften und die Schweißnahtfestigkeit wurden bestimmt (Tabelle 4).

**Tabelle 4**

| | | Vergleich 5 | Beispiel 10 |
|---|---|---|---|
| PA 66 | % | 69,5 | 69,1 |
| Glasfaser | % | 30,0 | 30,0 |
| Ruß | % | 0,1 | 0,1 |
| Hitzestabilisator | % | 0,2 | 0,2 |
| Gleitmittel | % | 0,2 | 0,2 |
| Lekutherm X 18 | % | keine | 0,4 |
| rel. Viskosität | | 2,85 | 4,10 |
| | | | |
| Izod-Schlagzähigkeit | KJ/m² | 60 | 68 |
| Reißfestigkeit | N/mm² | 180 | 178 |
| Reißdehnung | % | 3,4 | 3,6 |
| Zug-E-Modul | N/mm² | 9400 | 9800 |
| Biegefestigkeit | N/mm² | 290 | 273 |
| Randfaserdehnung | % | 4,3 | 4,4 |
| Biege-E-Modul | N/mm² | 8300 | 8450 |

### Beispiel 11

Aus Vergleich 2, Beispiel 8 und Vergleich 5 wurden Schalen eines Ansaugkrümmers im Spritzgießverfahren gespritzt, nach dem Vibrationsverfahren zusammengeschweißt und danach der Berstdruck bestimmt. Der Ansaugkrümmer wurde in Segmente geschnitten und die Schweißnahtfestigkeit bestimmt. Die erhaltenen Resultate sind in Tabelle 5 zusammengestellt.

**Tabelle 5**

| Berstdruck und Schweißnahtfestigkeit an vibrationsgeschweißten Ansaugkrümmern | | | |
|---|---|---|---|
| | Vergleich 2 PA6 + 30 % GF | Vergleich 5 PA66 + 30 5 GF | Beispiel 8 |
| Berstdruck (bar) | 6,68 | 4,45 | 7,75 |
| Schweißnahtfestigkeit (N) | 630 | 460 | 791 |

## Patentansprüche

1. Polyamidformmassen bestehend aus
A) von 79 bis 47 Gew.-% eines thermoplastischen teilkristallinen Polyamids,
B) von 0 bis 50 Gew.-% Verstärkungsstoffen,
C) von 0,1 bis 4 Gew.-% eines Diepoxids,
D) von 0,1 bis 2 Gew.-% Verarbeitungsadditiven.

2. Formmassen gemäß Anspruch 1, dadurch gekennzeichnet, daß das thermoplastische, teilkristalline Polyamid A), Polyamid 6, Polyamid 66, Polyamid 46, Polyamid 610, Polyamid 6/6T oder teilkristallines Copolyamid auf Basis dieser Polyamide oder einer Mischung aus den genannten Polyamiden ist.

3. Formmassen gemäß Anspruch 1, dadurch gekennzeichnet, daß als Verstärkungsstoff B) Glasfasern, Kohlefasern, Mineralfasern, mineralische Füllstoffe oder Mischungen daraus verwendet werden.

4. Formmassen gemäß Anspruch 1, dadurch gekennzeichnet, daß als Diepoxid C) handelsübliche Diepoxide, auf Basis Diglycidylether, (Bisphenol A und Epichlorhydrin), auf Basis Aminepoxidharzen (Anilin und Epichlorhydrin), auf Basis Diglycidylester (cycloaliphatische Dicarbonsäuren und Epichlorhydrin) einzeln oder in Mischungen verwendet.

5. Verwendung der Formmassen gemäß dem Anspruch 1 zur Herstellung von geformten Körpern nach dem Spritzgieß-, Gasinjektions-, Extrusions- und Extrusi onsblasverfahren.

6. Verwendung der Formmassen gemäß dem Anspruch 1 in einem Schweißverfahren von extrudierten oder gespritzten Teilen nach dem Heißelement-, Heißsiegel-, Vibrations- oder Hochfrequenzverfahren.

7. Formkörper, hergestellt aus Formmassen gemäß dem Anspruch 1.

## Claims

1. Polyamide moulding compositions consisting of
A) from 79 to 47 wt.% of a thermoplastic, partially crystalline polyamide,
B) from 0 to 50 wt.% of reinforcing materials,
C) from 0.1 to 4 wt.% of a diepoxide,
D) from 0.1 to 2 wt.% of processing additives.

2. Moulding compositions according to claim 1,
characterised in that the thermoplastic, partially crystalline polyamide A) is polyamide 6, polyamide 66, polyamide 46, polyamide 610, polyamide 6/6T or a partially crystalline copolyamide based on these polyamides or a mixture of the stated polyamides.

3. Moulding compositions according to claim 1,
characterised in that glass fibres, carbon fibres, mineral fibres, mineral fillers or mixtures thereof are used as the reinforcing material B).

4. Moulding compositions according to claim 1,
characterised in that conventional commercial diepoxides based on diglycidyl ether (bisphenol A and epichlorohydrin), on aminoepoxy resins (aniline and epichlorohydrin), on diglycidyl esters (cycloaliphatic dicarboxylic acids and epichlorohydrin) are used individually or as mixtures as the diepoxide C).

5. Use of the moulding compositions according to claim 1 for the production of shaped articles using the injection moulding, gas injection, extrusion and extrusion blow moulding processes.

6. Use of the moulding compositions according to claim 1 in a welding process for extruded or injection moulded parts using the hot element, heat sealing, vibration or high frequency processes.

7. Mouldings produced from moulding compositions according to claim 1.

## Revendications

1. Matières à mouler en polyamides consistant en
A) 79 à 47 % en poids d'un polyamide thermoplastique partiellement cristallisé,
B) 0 à 50 % en poids de matières renforçantes,
C) 0,1 à 4 % en poids d'un diépoxyde,
D) 0,1 à 2 % en poids d'additifs de façonnage.

2. Matières à mouler selon la revendication 1, caractérisées en ce que le polyamide thermoplastique partiellement cristallisé A) consiste en polyamide 6, polyamide 66, polyamide 46, polyamide 610, polyamide 6/6T ou copolyamide partiellement cristallisé à base de ces polyamides ou en un mélange des polyamides mentionnés.

3. Matières à mouler selon la revendication 1, caractérisées en ce que les additifs de façonnage B) sont des fibres de verre, des fibres de carbone, des fibres minérales, des matières de charge minérales ou des mélanges de ces matières.

4. Matières à mouler selon la revendication 1, caractérisées en ce que le diépoxyde C) consiste en diépoxydes du commerce à base d'éthers diglycidyliques (bisphénol A et épichlorhydrine), à base de résines aminoépoxydiques (aniline et épichlorhydrine), à base d'esters diglycidyliques (acides dicarboxyliques cycloaliphatiques et épichlorhydrine) ou mélanges de ces diépoxydes.

5. Utilisation des matières à mouler selon la revendication 1 pour la fabrication d'objets moulés par les techniques de moulage par injection, d'injection par gaz, d'extrusion ou d'extrusion-soufflage.

6. Utilisation des matières à mouler selon la revendication 1, dans des opérations de soudure de pièces extrudées ou injectées par les techniques de soudure par éléments chauds, de soudure à chaud, de soudure par vibrations ou de soudure par hautes fréquences.

7. Objets moulés fabriqués à partir des matières à mouler selon la revendication 1.
